# EUROPEAN PATENT APPLICATION

(11) **EP 4 575 970 A1**
(43) Date of publication of application: **25.06.2025**
(21) Application number: 23854713.7
(22) Date of filing: 21.06.2023
(51) Int. Cl.: G06Q 40/06, G06Q 30/0279

(54) **CONTAINER INVESTMENT MANAGEMENT METHOD AND CONTAINER INVESTMENT MANAGEMENT DEVICE**

(30) Priority: 16.08.2022 JP 2022129620
(71) Applicant: Toyo Seikan Group Holdings, Ltd., Shinagawa-ku Tokyo 141-8627 (JP)
(72) Inventor: KUNIMASA, Hidehiko, Tokyo 141-8627 (JP); TANABE, Suguru, Tokyo 141-8627 (JP); FURUKAWA, Satoshi, Tokyo 141-8627 (JP); OKAMURA, Hiroshi, Tokyo 141-8627 (JP); MIKI, Ippei, Tokyo 141-8627 (JP); TAKEUCHI, Yuri, Tokyo 141-8627 (JP)
(74) Representative: Piticco, Lorena
(86) International application number: PCT/JP2023/023029
(87) International publication number: WO 2024/038675

(57) **Abstract**

Problem

To provide a container investment management method that can realize a new revenue structure through distribution of a container.

Solution

A container investment management method manages, using a computer, an investment in a container fillable with a content, and a dividend for the investment. The container investment management method includes performing investment information reception that involves receiving investment information (D1) relating to the investment, performing distribution container setting that involves setting a container quantity of a container (10) distributed in a distribution market, in accordance with the investment information (D1), performing conversion that involves converting container distribution information (D4) into a value medium (13), the container distribution information being based on collected data (D3) collected through distribution of the container (10) in the container quantity, the container (10) being filled with a content (11) and distributed in the distribution market, and performing dividend information generation that involves generating dividend information (D6) relating to a dividend, by allocating the value medium (13) on the basis of the investment information (D1).

## Description

### Technical Field

The present invention relates to a container investment management method and a container investment management device.

### Background Art

In the related art, as a management method used when a product, which is a container filled with a content, is distributed in a distribution market, it is known that inventory management, sales prediction, marketing, tracing, and the like of the product are performed using a container identification code assigned to the container. For example, Patent Document 1 discloses a technology for managing a product by reading a barcode printed on a container with a barcode reader. In addition, Patent Document 2 discloses a technology for managing a product by reading an IC tag attached to a container with a reader/writer.

### Citation List

### Patent Literature

Patent Document 1: JP 2003-256765 A
Patent Document 2: JP 2018-188199 A

### Summary of Invention

### Technical Problem

In Patent Document 1 and Patent Document 2, the management of the product is performed using a container identification code assigned to the container, and sales of the container and the product are a fundamental revenue source in a business related to the manufacturing of the container and the manufacturing of the product, which is the container filled with a content. Therefore, in order to improve the profitability of the business, it is necessary to establish a new revenue structure in addition to the sales of the container and the product.

The present invention has been made in view of the above problem, and an object of the present invention is to provide a container investment management method and a container investment management device that can realize a new revenue structure through distribution of a container.

### Solution to Problem

In order to achieve the object described above, a container investment management method according to an aspect of the present invention manages, using a computer, an investment in a container fillable with a content, and a dividend for the investment. The method includes performing investment information reception that involves receiving investment information relating to the investment, performing distribution container setting that involves setting a container quantity of the container to be distributed in a distribution market, in accordance with the investment information, performing conversion that involves converting container distribution information into a value medium, the container distribution information being based on collected data collected through distribution of the container in the container quantity, the container being filled with the content and distributed in the distribution market, and dividend information generation that involves generating dividend information relating to the dividend, by allocating the value medium on the basis of the investment information.

### Advantageous Effects of Invention

With a container investment management method according to an aspect of the present invention, container distribution information is converted into a value medium, the container distribution information being based on collected data collected through distribution of a container in a distribution market in a container quantity set according to investment information, and dividend information is generated by allocating the value medium on the basis of the investment information. Therefore, the investment in the container can be collected, and also the dividend for the investment can be provided. As a result, a new revenue structure can be realized through distribution of the container.

Issues, configurations, and effects other than those mentioned above will be clarified in the embodiments of the invention described below.

### Brief Description of Drawings

FIG. 1 is an overall view illustrating an example of a container distribution system 1.
FIG. 2 is a schematic diagram illustrating an example of containers 10 and a flow of various types of information in the container distribution system 1.
FIG. 3 is a block diagram illustrating an example of a container investment management device 2.
FIG. 4 is a data configuration diagram illustrating an example of a distribution management database 210.
FIG. 5 is a data configuration diagram illustrating an example of a container investment management database 211.
FIG. 6 is a functional explanatory diagram illustrating an example of the container investment management device 2.
FIG. 7 is a hardware configuration diagram illustrating an example of a computer 900 that constitutes each device.
FIG. 8 is a flowchart illustrating an example of a container investment management method performed by the container investment management device 2.
FIG. 9 is a flowchart (a continuation of FIG. 8) illustrating the example of the container investment management method performed by the container investment management device 2.

### Description of Embodiments

Embodiments of the present invention are described below with reference to the accompanying drawings. In the following, the scope of the present invention is schematically described, mainly to the extent necessary to describe the relevant parts of the present invention to achieve the objects of the present invention, and the description is omitted where publicly known techniques are applied.

### Configuration of Container Distribution System 1

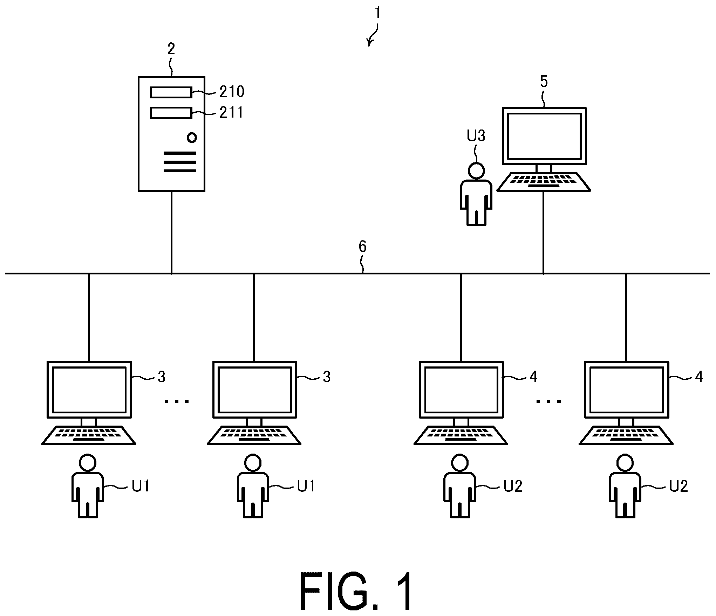

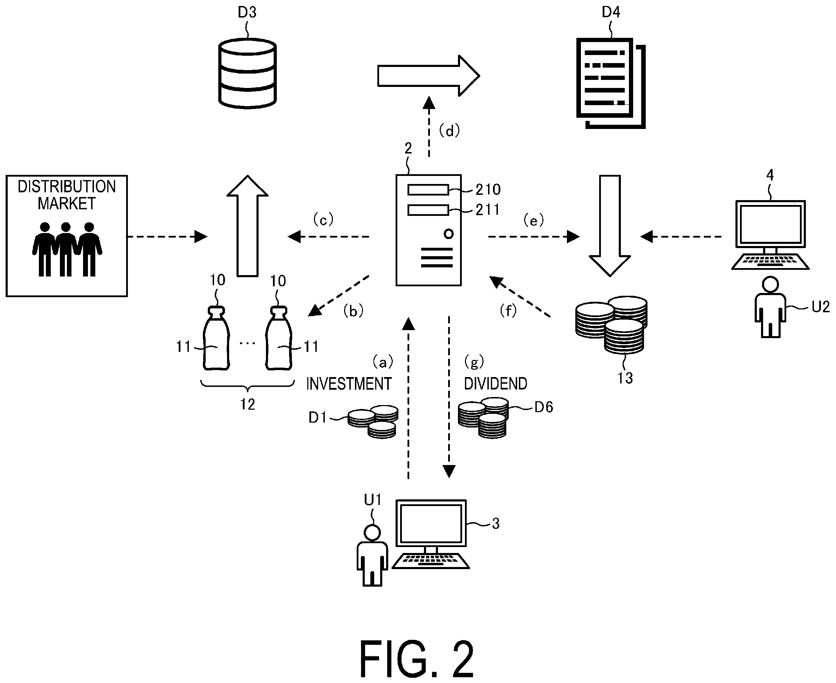

FIG. 1 is an overall view illustrating an example of a container distribution system 1 according to the present embodiment. FIG. 2 is a schematic diagram illustrating an example of containers 10 and a flow of various types of information in the container distribution system 1. The container distribution system 1 functions as a system that receives an investment in the containers 10 that are fillable with a content 11, and provides a dividend for the investment by converting, into a value medium 13, container distribution information D4 based on a collected data D3 collected in the process of distributing the containers 10 that are investment target containers in a distribution market.

Each of the containers 10 is manufactured using a raw material such as plastic, metal, glass, or paper, for example, and has any shape or size. Examples of the types of the container 10 include a plastic bottle made of polyethylene terephthalate (PET) and the like, a metal can made of steel, aluminum, and the like, a glass bottle, a paper pack, and a laminated pouch. Note that the container 10 may be a returnable container or may be a single-use container.

The content 11 is liquid, solid, powder, granules, or the like. Examples of the types of the content 11 include beverages such as water, juice, milk, and the like, food, pharmaceuticals, and cosmetics. The content 11 may be at room temperature, chilled (refrigerated), or frozen. In addition, the content 11 may be heated or unheated in the manufacturing process, and may be a fresh product or a processed product in the case of beverages or food.

The containers 10, for example, are manufactured by a container manufacturer, and the content 11 is manufactured by a content manufacturer and made to fill the containers 10 corresponding to the type of the content 11, thereby being manufactured as a product 12 distributed in the distribution market. At this time, the content manufacturer is, for example, a beverage manufacturer, a food manufacturer, or the like, and when the type and quantity of the containers 10 are specified and the containers 10 are ordered from the container manufacturer, the containers 10 corresponding to the order are delivered from the container manufacturer and a price for the containers 10 is paid to the container manufacturer.

When the product 12 is manufactured, for example, a label on which is printed an identification code image (container identification code), such as a one-dimensional code or a two-dimensional code, is attached to each of the containers 10, or an electronic tag (IC tag) called an RFID is embedded in the container 10, and thus a container ID (container identification code) for identifying the container 10 on an individual basis or a lot basis is assigned to the container 10. The product 12 is sold to a consumer (a general consumer, a business operator, or the like) via, for example, a wholesaler, a retailer, or a trading company in the distribution market.

Examples of forms of the investment for the containers 10 include a form in which, when the content manufacturer orders the containers 10 and the type of the ordered containers 10 matches the type of the containers 10 that are investment target containers, a part or all of the purchase cost of the containers 10 is invested, and a form in which when the container manufacturer manufactures the containers 10 and the type of the manufactured containers 10 matches the type of the containers 10 that are investment target containers, a part or all of the manufacturing cost of the containers 10 is invested. The containers 10 that are investment target containers are provided to the content manufacturer in accordance with the order from the content manufacturer, and the content manufacturer can receive the provision of the investment target containers 10 without having to pay the cost of the investment. On the other hand, instead of receiving the investment, the content manufacturer is required to permit the collection of the collected data D3 using the containers 10 that are investment target containers without holding the ownership of the containers 10 that are investment target containers, and to cooperate with the collection of the collected data D3 as necessary. Note that the investment in the containers 10 is not limited to the upper limit of the purchase cost or the manufacturing cost of the containers 10, and the investment may exceed these costs.

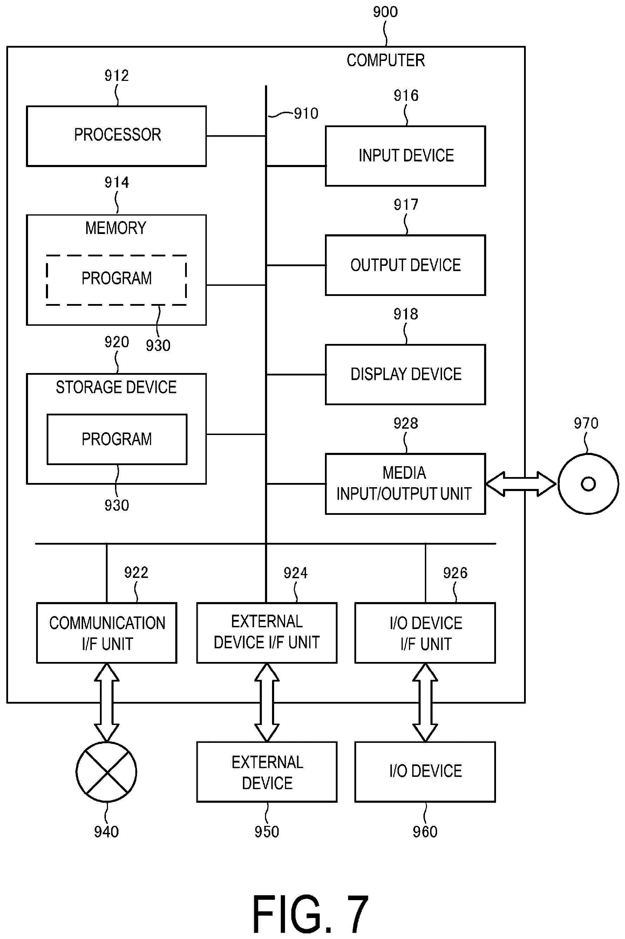

The container distribution system 1 includes, as a main component thereof, a container investment management device 2 that manages the collected data D3 collected in the process of distributing the containers 10 in the distribution market, and manages the investment and the dividend for the containers 10. The container investment management device 2 is connected to an investor terminal device 3 used by an investor U1, an information user terminal device 4 used by an information user U2, and a management business operator terminal device 5 used by a management business operator U3 of the container investment management device 2, via a network 6 that is a wired or wireless network. For example, the devices 2 to 5 are each constituted by a general-purpose or dedicated computer (see FIG. 7 described later), and are configured so as to be able to mutually transmit and receive various types of data via the network 6. Note that the number of each of the devices 2 to 5 and the configuration of the network 6 are not limited to the example illustrated in FIG. 1.

The container investment management device 2 is constituted by a server-type computer or a cloud-type computer, for example. The container investment management device 2 includes a distribution management database 210 capable of registering container state data acquired in each phase of manufacturing, shipping, transportation, sales, consumption, and the like of the product 12 (the containers 10 filled with the content 11), and a container investment management database 211 that can register investment information D1 related to the investment in association with dividend information D6 related to the dividend. Note that in the distribution management database 210, only the container state data related to the containers 10 that are investment target containers may be registered, or the container state data related to the containers 10 that are non-investment target containers may also be registered.

When the container investment management device 2 receives the investment information D1 from the investor U1 via the investor terminal device 3 (arrow (a) in FIG. 2), the container investment management device 2 registers the investment information D1 in the container investment management database 211 and performs the investment in the containers 10 on the basis of the investment information D1 (arrow (b) in FIG. 2). Then, when the product 12, which corresponds to the containers 10 that are investment target containers filled with the content 11, is distributed in the distribution market, the container ID assigned to the container 10 is read by a reading device (not illustrated) such as a code reader, a camera, or an electronic-tag reader, and thus the container investment management device 2 registers, in the distribution management database 210, the container state data indicating the state of each phase of the product 12 in association with the container ID and collects the collected data D3 as a dataset of the container state data (arrow (c) in FIG. 2).

The reading device is used in each phase in the distribution market, and is installed in each location, such as a manufacturing factory, a logistics base, a transportation vehicle, a sales store, and a refrigerator in a home of a consumer. At this time, the reading device may be a fixed type or a handy type, or may be an integrated type integrated into a portable computer (such as a smartphone). Examples of the container state data include a manufacturing date and time, a manufacturing location, a shipment date and time, a transportation time, a transportation temperature, a sales date and time, a sales price, a sales location, a consumption date and time, a consumer ID, a consumption location, a storage temperature, and the like. Note that a part of the container state data may be acquired by a state detection device (such as a temperature sensor) installed at each location, similarly to the reading device. The container investment management device 2 may acquire the container state data in cooperation with a reading device, a state detection device, and a database included in an external system (such as a manufacturing management system, a transportation management system, or a sales management system) or in cooperation with an external application (such as a net shopping application or a refrigerator management application). In this case, personal information (such as sex, age, and preference) related to the consumer associated with the consumer ID may be collected as a part of the container state data.

In addition, the container investment management device 2 generates the container distribution information D4 based on the collected data D3 collected by distributing the containers 10 that are investment target containers (in actuality, the product 12) in the distribution market (arrow (d) in FIG. 2), and converts the container distribution information D4 into the value medium 13 by providing the container distribution information D4 to the information user U2 via the information user terminal device 4 (arrow (e) in FIG. 2). Then, the container investment management device 2 generates the dividend information D6 by allocating the value medium 13 on the basis of the investment information D1 (arrow (f) in FIG. 2), registers the dividend information D6 in the container investment management database 211, and provides the dividend to the investor U1 based on the dividend information D6 (arrow (g) in FIG. 2).

The investor terminal device 3 is constituted by, for example, a stationary computer or a portable computer, and is used by the investor U1. The investor terminal device 3 is installed with a program such as an application or a browser, receives various types of input operations, and outputs various types of information via a display screen or a voice. The investor terminal device 3 supports the investor U1 by, for example, receiving an input operation for instructing a new investment or instructing a status check of the investment or the dividend, and displaying the investment information D1 or the dividend information D6 on the display screen.

The information user terminal device 4 is constituted by, for example, a stationary computer or a portable computer, and is used by the information user U2. Similarly to the investor terminal device 3, the information user terminal device 4 is installed with a program such as an application or a browser, receives various types of input operations, and outputs various types of information via a display screen or a voice. The information user terminal device 4 supports the information user U2 by, for example, receiving an input operation for instructing the provision of the container distribution information D4 or instructing a conversion condition for converting the container distribution information D4 into the value medium 13, and displaying the container distribution information D4 and the conversion condition on the display screen.

The management business operator terminal device 5 is constituted by, for example, a stationary computer or a portable computer, and is used by the management business operator U3. Similarly to the investor terminal device 3, the management business operator terminal device 5 is installed with a program such as an application or a browser, receives various types of input operations, and outputs various types of information via a display screen or a voice. The management business operator terminal device 5 supports the management business operator U3 by, for example, receiving an input operation for instructing a status check of the investment or the dividend, and displaying the distribution management database 210 and the container investment management database 211 on the display screen.

### Configuration of Container Investment Management Device 2

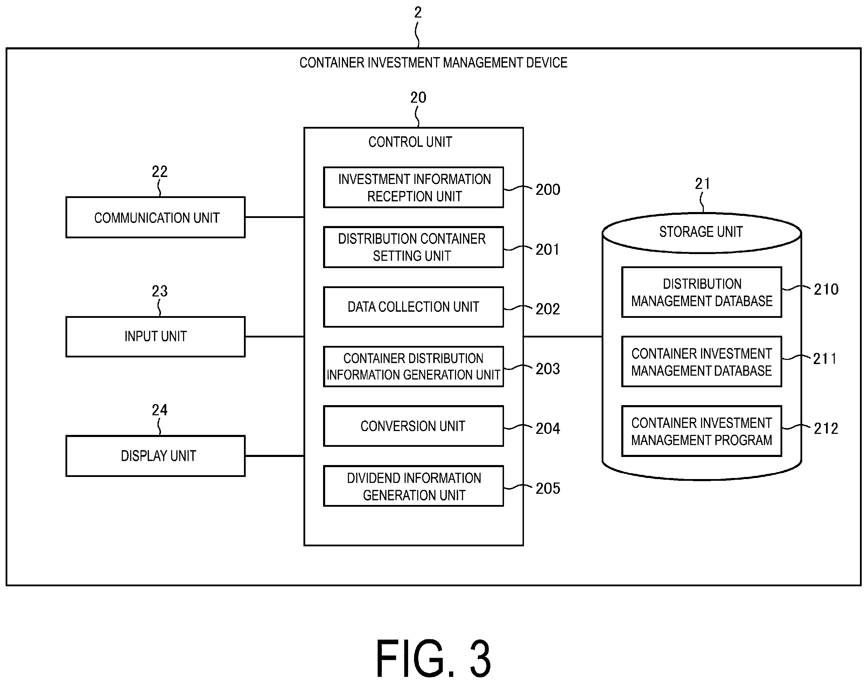

FIG. 3 is a block diagram illustrating an example of the container investment management device 2 according to the present embodiment. The container investment management device 2 includes a control unit 20 constituted by a processor and the like, a storage unit 21 constituted by an HDD, an SSD, a memory, and the like, a communication unit 22 that is a communication interface with the network 6, an input unit 23 constituted by a keyboard, a mouse, and the like, and a display unit 24 constituted by a display and the like. Note that the input unit 23 and the display unit 24 may be omitted.

The storage unit 21 stores the distribution management database 210, the container investment management database 211, and a container investment management program 212, and also stores an operating system, other programs, various types of data, and the like.

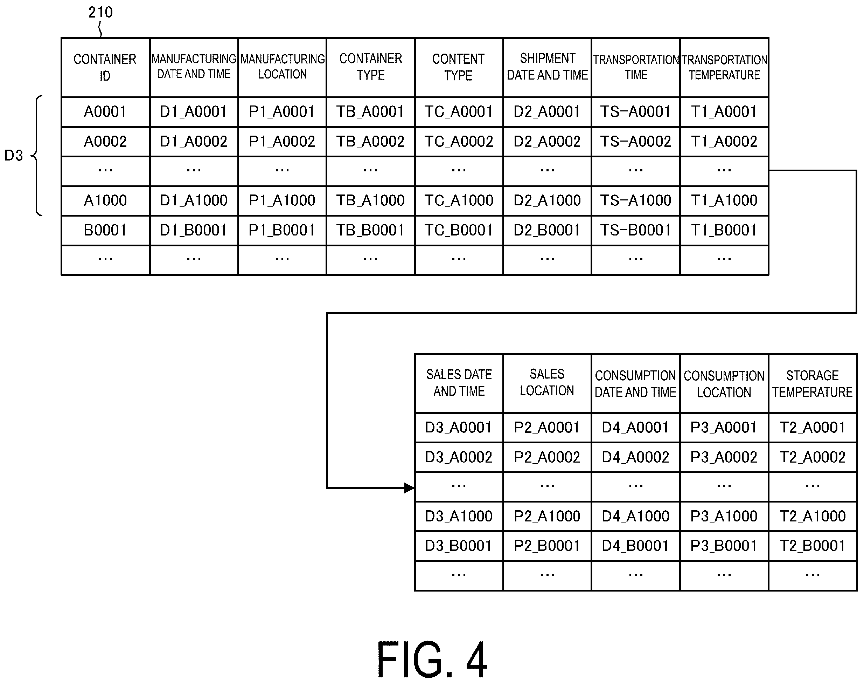

FIG. 4 is a data configuration diagram illustrating an example of the distribution management database 210. The distribution management database 210 has a record for each of the container IDs. Each record has fields in which, for example, the manufacturing date and time, the manufacturing location, a container type, a content type, the shipment date and time, the transportation time, the transportation temperature, the sales date and time, the sales location, the consumption date and time, the consumption location, the storage temperature, and the like can be registered as the container state data.

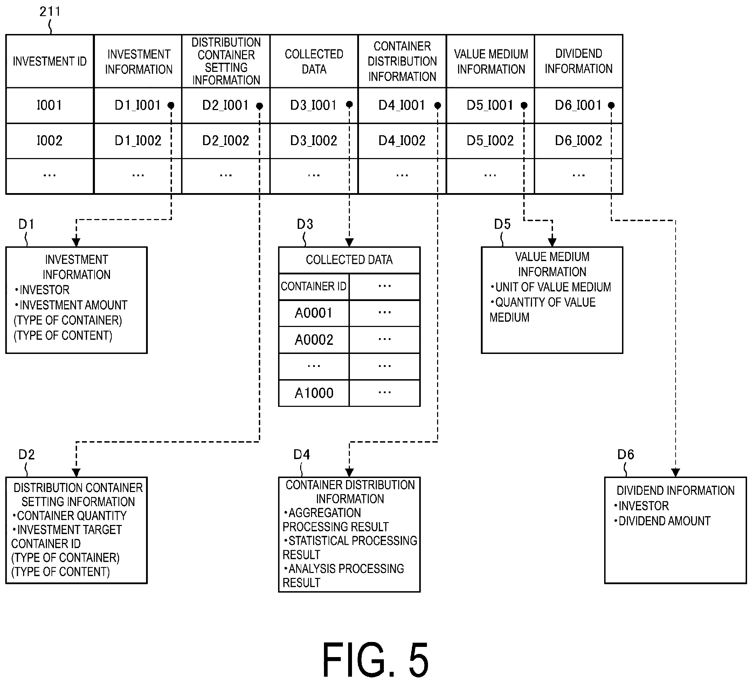

FIG. 5 is a data configuration diagram illustrating an example of the container investment management database 211. The container investment management database 211 has a record for each of the investment IDs for associating various types of information handled in the container investment management method with each other. Each record has fields in which, for example, the investment information D1, distribution container setting information D2, the collected data D3, the container distribution information D4, value medium information D5, the dividend information D6, and the like can be registered. Note that the container investment management database 211 can be referred to from the management business operator terminal device 5, and editing operations such as addition, deletion, and modification of each data may be performed by the management business operator U3 on the display screen of the management business operator terminal device 5.

The investment information D1 includes at least the investor U1 and an amount invested by the investor U1. When there are a plurality of investors U1, the amount invested by each of the investors U1 is included. Note that the investment information D1 may include at least one of the type of the containers 10 that are investment target containers or the type of the content 11 that is to fill the containers 10 that are investment target containers.

The distribution container setting information D2 includes at least the container quantity of the containers 10 that are investment target containers and an investment target container ID specifying the container 10 that is an investment target container, using the container ID. Note that the distribution container setting information D2 may include at least one of the type of the containers 10 that are investment target containers or the type of the content 11 that is to fill the containers 10 that are investment target containers.

The collected data D3 is constituted by the dataset of the container state data acquired by distributing the containers 10 that are investment target containers (in actuality, the product 12) in the distribution market. For example, in the record specified by the investment ID "I001", when the distribution container setting information D2 is set with the container quantity "1000" and the investment target container IDs "A0001 to A1000", the collected data D3 is constituted by the container state data for 1000 of the containers 10, as illustrated in FIG. 4.

The container distribution information D4 is, for example, generated by performing data analysis processing such as aggregation processing, statistical processing, and analytical processing on the collected data D3, and includes an aggregation processing result, a statistical processing result, an analytical processing result, and the like. Note that, instead of or in addition to the result of the data analysis processing, the container distribution information D4 may include the collected data D3 itself, or may be obtained by deleting a portion of the data related to personal information of the consumer from the collected data D3.

The value medium information D5 includes at least the unit of the value medium 13 and the quantity of the value medium 13. The value medium 13 is a price transferred by the information user U2 in exchange for the provision of the container distribution information D4, and for example, when the payment is made in any chosen currency, the quantity of the value medium 13 corresponds to the payment amount. Note that the currency may be a digital currency.

The dividend information D6 includes at least the investor U1 and the dividend amount for the investor U1. When there are a plurality of the investors U1, the dividend amount for each of the investors U1 is included.

Note that the data configuration of the distribution management database 210 (FIG. 4) and the container investment management database 211 (FIG. 5) are not limited to the examples described above and may be changed as appropriate. A part of the data described above may be omitted, or data other than the data described above may be added. In addition, a part or all of the distribution management database 210 and the container investment management database 211 may be stored in an external device (or a plurality of external devices) that can be connected to the network 6. In this case, the control unit 20 may access the external device via the communication unit 22.

As illustrated in FIG. 3, the control unit 20 functions as an investment information reception unit 200, a distribution container setting unit 201, a data collection unit 202, a container distribution information generation unit 203, a conversion unit 204, and a dividend information generation unit 205 by executing the container investment management program 212 stored in the storage unit 21.

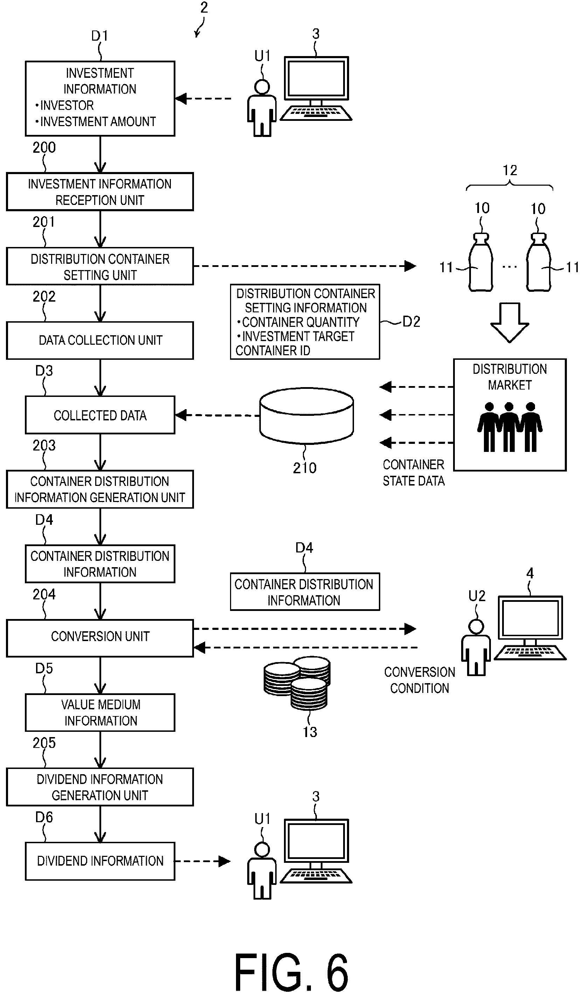

FIG. 6 is a functional explanatory diagram illustrating an example of the container investment management device 2 according to the present embodiment.

The investment information reception unit 200 receives the investment information D1 from the investor terminal device 3. For example, the investment information reception unit 200 causes the investor terminal device 3 to display a display screen on which the investment information D1 can be input, receives, as the investment information D1, the investment amount, the type of the containers 10 that are investment target containers, the type of the content 11 that is to fill the containers 10 that are investment target containers, and the like input on the display screen, and registers the investment information D1 in the container investment management database 211.

The distribution container setting unit 201 sets the container quantity of the containers 10 to be distributed in the distribution market in accordance with the investment information D1 received by the investment information reception unit 200. For example, the distribution container setting unit 201 sets the container quantity of the containers 10 that are investment target containers, by dividing the investment amount in the investment information D1 by the manufacturing unit price of the containers 10. At this time, when there are a plurality of the investors U1 included in the investment information D1, the distribution container setting unit 201 totals the investment amount for each of the investors U1 and divides the total amount by the manufacturing unit price of the containers 10 to set the container quantity of the containers 10 that are investment target containers. Then, the distribution container setting unit 201 specifies, as the investment target container ID, the container ID assigned to the investment target container 10.

At this time, the distribution container setting unit 201 may select the type of the investment target container 10 in accordance with the investment information D1. For example, when the type of the container 10 is included in the investment information D1, the distribution container setting unit 201 may select the type of the container 10 in accordance with the investment information D1. Otherwise, the distribution container setting unit 201 may select the type of the container 10 in accordance with the investment amount in the investment information D1. For example, when the investment amount is high, the distribution container setting unit 201 may select the container 10 having a high manufacturing unit price. Note that the distribution container setting unit 201 may select a plurality of the types of the container 10.

In addition, the distribution container setting unit 201 may select the type of the content 11 that is to fill the investment target container 10 in accordance with the investment information D1. For example, when the type of the content 11 is included in the investment information D1, the distribution container setting unit 201 may select the type of the content 11 in accordance with the investment information D1. Otherwise, the distribution container setting unit 201 may select the type of the content 11 in accordance with the investment amount in the investment information D1. For example, when the investment amount is high, the distribution container setting unit 201 may select the content 11 having a high manufacturing unit price. Note that the distribution container setting unit 201 may select a plurality of types of the content 11.

Then, the distribution container setting unit 201 registers, in the container investment management database 211, a result of setting the container quantity, the investment target container ID, and the like of the investment target container 10, as the distribution container setting information D2.

The data collection unit 202 collects, as the collected data, the container state data indicating a state obtained when the containers 10 of the container quantity set by the distribution container setting unit 201, that is, the containers 10 that are investment target containers, are distributed in the distribution market. For example, the data collection unit 202 refers to the distribution management database 210 using the investment target container ID in the distribution container setting information D2 as a key, and extracts a record having the container ID that matches the investment target container ID. Then, the data collection unit 202 acquires the container state data registered in the field of the extracted record, and registers the acquired result in the container investment management database 211 as the collected data D3.

The container distribution information generation unit 203 generates the container distribution information D4 by performing data analysis processing such as aggregation processing, statistical processing, and analytical processing on the collected data D3 collected by the data collection unit 202. For example, the container distribution information generation unit 203 calculates an average period from the purchase date and time to the consumption date and time, an average value of the storage temperature, and the like, and registers the calculated result in the container investment management database 211 as the container distribution information D4. Note that for the data analysis processing, for example, any aggregation method, statistical method, analytical method, and the like can be adopted.

The conversion unit 204 converts the container distribution information D4 generated by the container distribution information generation unit 203, that is, the container distribution information D4 based on the collected data D3, into the value medium 13, and registers the result of the conversion as the value medium information D5 in the container investment management database 211. For example, the conversion unit 204 converts the container distribution information D4 into the value medium 13 by causing the information user terminal device 4 to display the display screen on which the conversion condition for converting the container distribution information D4 into the value medium 13 can be input and by receiving the conversion condition input on the display screen. The conversion condition includes, for example, an amount of payment made by the information user U2 for the provision of the container distribution information D4.

Note that the conversion unit 204 may adopt an auction method. In this case, the conversion unit 204 is configured to be able to receive the conversion condition from a plurality of information user terminal devices 4 with respect to a specific piece of the container distribution information D4, and when a plurality of conversion conditions are received from the plurality of information user terminal devices 4, converts the container distribution information D4 into the value medium 13 on the basis of the conversion condition that maximizes the value medium 13. As a result, the value medium 13 is maximized, and the dividend can be increased further.

The dividend information generation unit 205 generates the dividend information D6 by allocating, on the basis of the investment information D1, the post-conversion value medium 13 converted by the conversion unit 204, that is, the value medium 13 in the value medium information D5. For example, when the dividend information D6 includes the plurality of investors U1, the dividend information generation unit 205 calculates the dividend amount for each of the investors U1 by proportionally dividing the value medium 13 based on the investment amount of each of the investors U1, and registers the dividend amount in the container investment management database 211 as the dividend information D6. Then, the dividend information generation unit 205 provides the dividend to the investor U1 on the basis of the dividend information D6, and transmits dividend notification information indicating the result of the dividend provision to the investor terminal device 3.

Note that the dividend information generation unit 205 may allocate the value medium 13 that has been subjected to cost deduction, which is obtained by deducting the cost-equivalent value medium 13, which is equivalent to at least a part of the cost required for the distribution of the containers, from the post-conversion value medium 13 converted by the conversion unit 204. For example, by allocating a part of the cost-equivalent value medium 13 to the container manufacturer or the content manufacturer, the price competitiveness of the container 10 and the product 12 can be improved, thereby facilitating the collection of the collected data D3. In addition, by allocating a part of the cost-equivalent value medium 13 to the management business operator U3, management work such as the operation and maintenance of the container investment management device 2 can be appropriately performed.

FIG. 7 is a hardware configuration diagram illustrating an example of a computer 900 that constitutes each device.

Each of the devices 2 to 5 of the container distribution system 1 is constituted by the computer 900 that is a general-purpose or dedicated computer. As illustrated in FIG. 7, the computer 900 includes, as main components thereof, a bus 910, a processor 912, a memory 914, an input device 916, an output device 917, a display device 918, a storage device 920, a communication I/F (interface) unit 922, an external device I/F unit 924, an I/O (input/output) device I/F unit 926, and a media input/output unit 928. Note that the above-mentioned components may be omitted as necessary in accordance with the application of the computer 900.

The processor 912 is composed of one or a plurality of computation processing devices (such as CPU (Central Processing Unit), MPU (Micro-processing unit), DSP (digital signal processor), and GPU (Graphics Processing Unit)) to operate as a control section that generally controls the entirety of the computer 900. The memory 914 is composed of a volatile memory (such as DRAM and SRAM) that stores various data and a program 930 and functions as a main memory, a nonvolatile memory (ROM), a flash memory, and the like, for example.

The input device 916 is constituted by, for example, a keyboard, a mouse, numeric keys, an electric pen, or the like, and functions as an input unit. The output device 917 is constituted by, for example, a sound (voice) output device, a vibration device, or the like, and functions as an output unit. The display device 918 is constituted by, for example, a liquid crystal display, an organic EL display, electronic paper, a projector, or the like, and functions as an output unit. The input device 916 and the display device 918 may be integrally formed as a touch panel display. The storage device 920 is constituted by, for example, an HDD, an SSD, or the like, and functions as a storage unit. The storage device 920 stores various data required for executing operating systems and the program 930.

The communication I/F unit 922 is connected to a network 940 (which may be the same as the network 6 in FIG. 1), such as the Internet and an intranet, in a wired or wireless manner, and functions as a communication unit that transmits and receives data to and from other computers in accordance with a predetermined communication standard. The external device I/F unit 924 is connected to an external device 950, such as a camera, a printer, a scanner, or a reader/writer, in a wired or wireless manner, and functions as a communication unit that transmits and receives data to and from the external device 950 in accordance with a predetermined communication standard. The I/O device I/F unit 926 is connected to an I/O device 960 such as various sensors and actuators, and functions as a communication unit that transmits to and receives from the I/O device 960 data and various signals such as a detection signal of a sensor and a control signal to an actuator, for example. The media input/output part 928 is constituted by a drive device such as a DVD (Digital Versatile Disc) drive or a CD (Compact Disc) drive, a memory card slot, or a USB connector, and reads and writes data from and to a medium (non-transitory storage medium) 970 such as a DVD, a CD, a memory card, or a USB memory.

In the computer 900 with the above-mentioned configuration, the processor 912 loads the program 930 stored in the storage device 920 into the memory 914 and executes it to control each unit of the computer 900 through the bus 910. Note that the program 930 may be stored in the memory 914 instead of the storage device 920. The program 930 may be stored in the media 970 in an installable file format or an executable file format, and provided to the computer 900 through the media input/output part 928. The program 930 may be provided to the computer 900 by downloading it via the network 940 through the communication I/F unit 922. In addition, the computer 900 may realize various functions that are realized by the processor 912 executing the program 930 using hardware such as an FPGA (field-programmable gate array) or an ASIC (application specific integrated circuit).

The computer 900 is, for example, any form of an electronic device constituted by a stationary computer or a portable computer. The computer 900 may be a client-type computer, a server-type computer, or a cloud-type computer.

### Operation of Container Distribution System 1

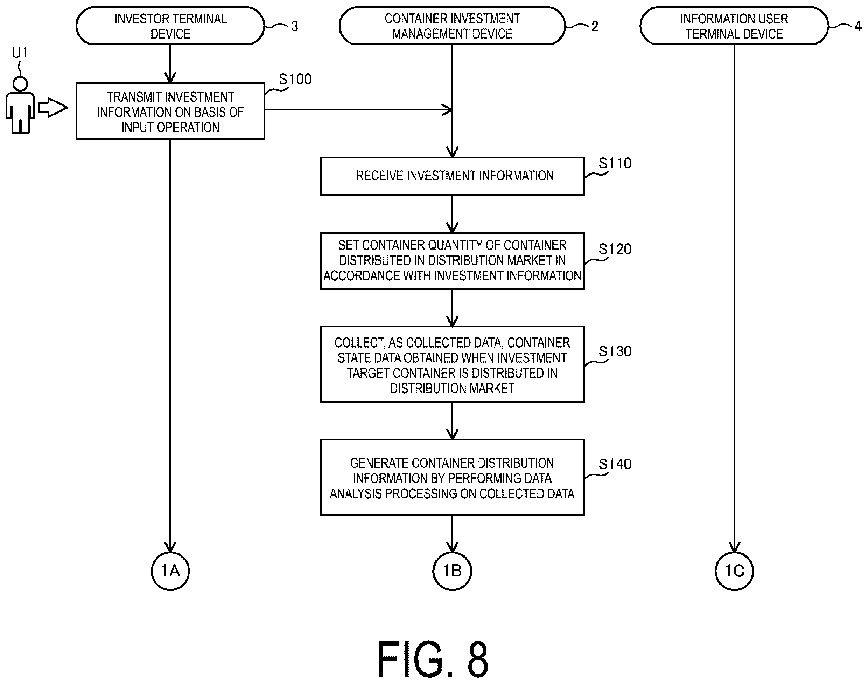

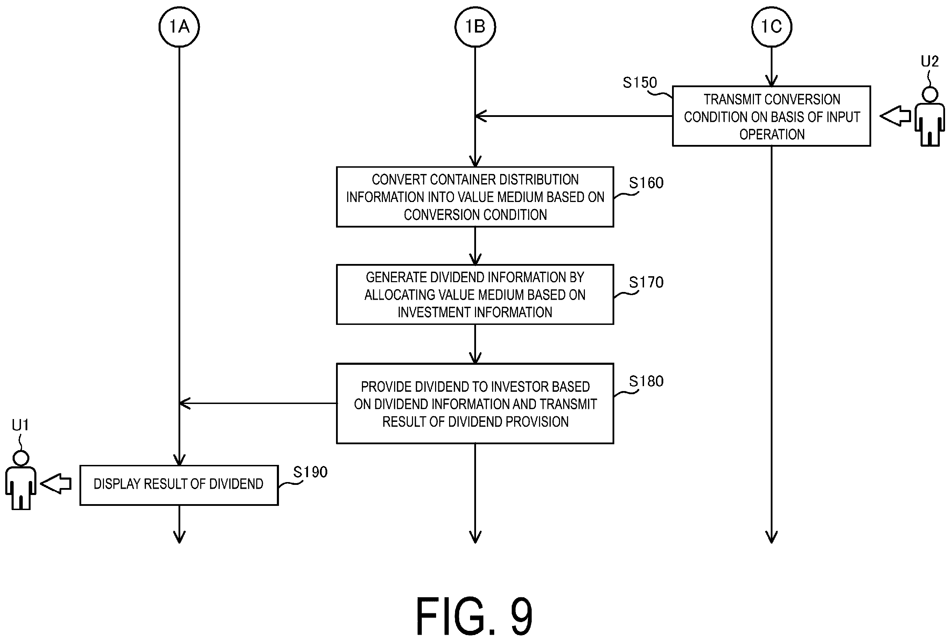

FIGS. 8 and 9 are flowcharts illustrating an example of a container investment management method performed by the container investment management device 2 according to the present embodiment. Note that the container investment management device 2 accesses the distribution management database 210 and the container investment management database 211 in order to register or refer to each of the information D1 to D6, but in the following description, the access operation will be appropriately omitted.

First, at step S100, when the investor U1 uses the investor terminal device 3 to successfully perform a login process to the container investment management device 2, the investor terminal device 3 displays a display screen for inputting the investment information D1 by communicating with the investment information reception unit 200, and transmits the investment amount and the like input on the display screen to the container investment management device 2 as the investment information D1. Note that it may be possible to input the type of the containers 10 that are investment target containers and the type of the content 11 that is to fill the containers 10 that are investment target containers on the display screen.

Subsequently, at step S110, the investment information reception unit 200 receives the investment information D1 transmitted at step S100. At this time, when related to a new investment, the investment information reception unit 200 allocates a new investment ID and registers the new investment ID in the container investment management database 211, and when related to an existing investment, the investment information reception unit 200 associates the investment with an existing investment ID and the associated data in the container investment management database 211.

Subsequently, at step S120, the distribution container setting unit 201 sets the container quantity of the containers 10 to be distributed in the distribution market in accordance with the investment information D1, and specifies, as the investment target container ID, the container ID assigned to the containers 10 that are investment target containers corresponding to the set container quantity.

Subsequently, at step S130, the data collection unit 202 refers to the distribution management database 210 using the investment target container ID as a key, and collects, as the collected data D3, the container state data obtained when the product 12, which has been manufactured by filling the containers 10 that are investment target containers with the content 11, is distributed in the distribution market.

Subsequently, at step S140, the container distribution information generation unit 203 generates the container distribution information D4 by performing data analysis processing on the collected data D3 collected at step S130.

Then, at step S150, when the information user U2 uses the information user terminal device 4 to successfully perform the login process to the container investment management device 2, the information user terminal device 4 displays a display screen for inputting the conversion condition by communicating with the conversion unit 204, and transmits, to the container investment management device 2, the payment amount and the like input on the display screen as the conversion condition.

Subsequently, at step S160, when the conversion unit 204 receives the conversion condition transmitted at step S150, the conversion unit 204 converts the container distribution information D4 into the value medium 13 on the basis of the conversion condition.

Subsequently, at step S170, the dividend information generation unit 205 generates the dividend information D6 by allocating the value medium 13 converted at step S160, on the basis of the investment information D1. Then, at step S180, the dividend information generation unit 205 provides the dividend to the investor U1 on the basis of the dividend information D6, and transmits the dividend notification information indicating the result of the dividend provision to the investor terminal device 3.

Subsequently, at step S190, when the investor terminal device 3 receives the dividend notification information transmitted at step S180, the investor terminal device 3 displays the result of the dividend on the basis of the dividend notification information, and the investor U1 can thus check the result of the dividend for the investment.

As described above, a series of processing illustrated in FIGS. 8 and 9 is completed. Note that, in the series of processing described above, steps S100 and S110 correspond to an investment information reception step, step S120 corresponds to a distribution container setting step, step S130 corresponds to a data collection step, step S140 corresponds to a container distribution information generation step, steps S150 and S160 correspond to a conversion step, and steps S170 and S180 correspond to a dividend information generation step.

As described above, according to the container investment management device 2 (an example of a computer) and the container investment management method using the container investment management device 2 according to the present embodiment, the container distribution information D4, which is based on the collected data D3 collected through distribution of the containers 10 of the container quantity set in accordance with the investment information D1 in the distribution market, is converted into the value medium 13, and the dividend information D6 is generated by allocating the value medium 13 on the basis of the investment information D1. Therefore, the investment for the containers 10 can be collected, and also the dividend for the investment can be provided. As a result, a new revenue structure can be realized through the distribution of the container 10.

### Other Embodiments

The present invention is not restricted to the embodiments described above, but can be implemented with various changes within the scope of not departing from the main purpose of the present invention. All of them are included in the technical concept of the present invention.

In the embodiment described above, the function of each unit included in the container investment management device 2 is described as being realized by one device. However, the function of each unit may be distributed among a plurality of devices (computers) to be realized by a plurality of devices.

In the embodiment described above, the case has been described in which the container investment management device 2 functions as the respective units 200 to 205 that execute the respective steps (steps S100 to S190) included in the container investment management method, in accordance with the flowcharts illustrated in FIGS. 8 and 9. However, some of the respective steps (respective units) may be omitted. For example, in the container investment management method (container investment management device 2), at least one of the data collection step (data collection unit 202) and the container distribution information generation step (container distribution information generation unit 203) may be omitted, and each omitted step (each omitted unit) may be executed by an external system (a manufacturing management system, a transportation management system, a sales management system, a data analysis system, or the like). In this case, the container investment management method (container investment management device 2) may be executed in cooperation with the external system.

Aspects of the present disclosure will be collectively described in the following supplementary notes.

### Supplementary Note 1

A container investment management method manages, using a computer, an investment in a container fillable with a content, and a dividend for the investment. The method includes performing investment information reception that involves receiving investment information relating to the investment, performing distribution container setting that involves setting a container quantity of the container distributed in a distribution market, in accordance with the investment information, performing conversion that involves converting container distribution information into a value medium, the container distribution information being based on collected data collected through distribution of the container in the container quantity, the container being filled with the content and distributed in the distribution market, and dividend information generation that involves generating dividend information relating to the dividend, by allocating the value medium on the basis of the investment information.

### Supplementary Note 2

In the container investment management method according to Supplementary Note 1, the distribution container setting includes selecting a type of the container to be distributed in the distribution market in accordance with the investment information.

### Supplementary Note 3

In the container investment management method according to Supplementary Note 1 or 2, the distribution container setting includes selecting a type of the content that is to fill the container to be distributed in the distribution market in accordance with the investment information.

### Supplementary Note 4

In the container investment management method according to any one of Supplementary Notes 1 to 3, when a plurality of proposals for conversion conditions are received for converting the container distribution information into the value medium, the conversion includes converting the container distribution information into the value medium on the basis of the conversion condition maximizing the value medium.

### Supplementary Note 5

In the container investment management method according to any one of Supplementary Notes 1 to 4, the dividend information generation includes allocating a post-cost-deduction value medium, the post-cost-deduction value medium being obtained by subtracting a cost-equivalent value medium equivalent to at least a part of a cost required for the distribution of the containers, from the value medium converted by the conversion.

### Supplementary Note 6

The container investment management method according to any one of Supplementary Notes 1 to 5, further includes performing data collection that involves collecting, as the collected data, container state data indicating a state when the container of the container quantity is distributed in the distribution market, and performing container distribution information generation that involves generating the container distribution information by performing data analysis processing on the collected data.

### Supplementary Note 7

A container investment management device manages an investment in a container fillable with a content, and a dividend for the investment. The device includes an investment information reception unit configured to receive investment information relating to the investment, a distribution container setting unit configured to set a container quantity of the container distributed in a distribution market, in accordance with the investment information, a conversion unit configured to convert container distribution information to a value medium, the container distribution information being based on collected data collected through distribution of the container in the container quantity, the container being filled with the content and distributed in the distribution market, and a dividend information generation unit configured to generate dividend information relating to the dividend, by allocating the value medium on the basis of the investment information.

### Reference Signs List

1 Container distribution system, 2 Container investment management device, 3 Investor terminal device, 4 Information user terminal device, 5 Management business operator terminal device, 6 Network, 10 Container, 11 Content, 12 Product, 13 Value medium, 20 Control unit, 21 Storage unit, 22 Communication unit, 23 Input unit, 24 Display unit, 200 Investment information reception unit, 201 Distribution container setting unit, 202 Data collection unit, 203 Container distribution information generation unit, 204 Conversion unit, 205 Dividend information generation unit, 210 Distribution management database, 211 Container investment management database, 212 Container investment management program

## Claims

1. A container investment management method that manages, using a computer, investment relating to a container fillable with a content, and a dividend for the investment, the method comprising:
performing investment information reception that involves receiving investment information relating to the investment;
performing distribution container setting that involves setting a container quantity of the container to be distributed in a distribution market, in accordance with the investment information;
performing conversion that involves converting container distribution information to a value medium, the container distribution information being based on collected data collected through distribution of the container in the container quantity, the container being filled with the content and distributed in the distribution market; and
performing dividend information generation that involves generating dividend information relating to the dividend, by allocating the value medium on the basis of the investment information.

2. The container investment management method according to claim 1, wherein
the distribution container setting includes selecting a type of the container to be distributed in the distribution market in accordance with the investment information.

3. The container investment management method according to claim 1, wherein
the distribution container setting includes selecting a type of the content that is to fill the container to be distributed in the distribution market in accordance with the investment information.

4. The container investment management method according to claim 1, wherein
when a plurality of proposals for conversion conditions are received for converting the container distribution information into the value medium, the conversion includes converting the container distribution information into the value medium on the basis of the conversion condition maximizing the value medium.

5. The container investment management method according to claim 1, wherein
the dividend information generation includes allocating a post-cost-deduction value medium, the post-cost-deduction value medium being obtained by subtracting a cost-equivalent value medium equivalent to at least a part of a cost required for the distribution of the containers, from the value medium converted by the conversion.

6. The container investment management method according to any one of claims 1 to 5, further comprising:
performing data collection that involves collecting, as the collected data, container state data indicating a state when the container of the container quantity is distributed in the distribution market; and
performing container distribution information generation that involves generating the container distribution information by performing data analysis processing on the collected data.

7. A container investment management device configured to manage an investment in a container fillable with a content, and a dividend for the investment, the container investment management device comprising:
an investment information reception unit configured to receive investment information relating to the investment;
a distribution container setting unit configured to set a container quantity of the container distributed in a distribution market, in accordance with the investment information;
a conversion unit configured to convert container distribution information to a value medium, the container distribution information being based on collected data collected through distribution of the container in the container quantity, the container being filled with the content and distributed in the distribution market; and
a dividend information generation unit configured to generate dividend information relating to the dividend, by allocating the value medium on the basis of the investment information.
